(19) Europäisches Patentamt / European Patent Office / Office européen des brevets

(11) **EP 4 102 199 B1**

(12) **EUROPEAN PATENT SPECIFICATION**

(45) Date of publication and mention
of the grant of the patent:
**13.05.2026 Bulletin 2026/20**

(21) Application number: **21382517.7**

(22) Date of filing: **10.06.2021**

(51) International Patent Classification (IPC):
***G01L 1/22*** *(2006.01)*

(52) Cooperative Patent Classification (CPC):
**G01L 1/2218**

(54) **STRAIN GAUGE LOAD CELL FOR MONITORING THE STRAIN IN PRESTRESSED ELEMENTS OR ELEMENTS SUBJECTED TO AXIAL STRAIN**

KRAFTMESSDOSE MIT DEHNUNGSMESSSTREIFEN ZUR ÜBERWACHUNG DER SPANNUNG IN VORGESPANNTEN ODER AXIAL BELASTETEN ELEMENTEN

CELLULE DE CHARGE DE JAUGE DE CONTRAINTE POUR SURVEILLER LA CONTRAINTE DANS DES ÉLÉMENTS PRÉCONTRAINTS OU DES ÉLÉMENTS SOUMIS À CONTRAINTE AXIALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2022 Bulletin 2022/50**

(73) Proprietors:
• **Fundación Tecnalia Research & Innovation**
**20009 Donostia - San Sebastián (ES)**
• **Universidad de Cantabria**
**39005 Santander, Cantabria (ES)**

(72) Inventors:
• **Gaute Alonso, Alvaro**
**39005 Santander (ES)**
• **Alonso Cobo, Carlos**
**39005 Santander (ES)**

• **García Sánchez, David**
**20009 San Sebastián - Donostia (GUIPÚZCOA) (ES)**
• **Jimenez, Jose Carlos**
**20009 San Sebastián - Donostia (GUIPÚZCOA) (ES)**
• **Ezquerro Andreu, Mikel**
**20009 San Sebastián - Donostia (GUIPÚZCOA) (ES)**

(74) Representative: **Balder IP Law, S.L.**
**Paseo de la Castellana 93**
**5ª planta**
**28046 Madrid (ES)**

(56) References cited:
**FR-A- 1 519 874      JP-A- 2016 186 441**
**US-A- 3 535 923      US-A1- 2005 103 123**

**Description**

**TECHNICAL FIELD**

The present invention belongs to the field of monitoring the strain existing in prestressed elements or elements subjected to axial strain. The invention has a special application in monitoring the strain existing in the active anchor of these elements.

**BACKGROUND OF THE INVENTION**

A structural element is an element belonging to a structure or which constitutes a structure in itself. A prestressed structural element is a structural element which is subjected to compressive axial strain prior to being put into operation. Prestressing units, also called prestressing elements, are used to prestress the structural element.

The strain in the prestressed structural elements varies throughout the useful life thereof, influenced by phenomena such as the prestress losses or the strains to which the structural element is subjected during the service life thereof. The prestress losses can be instantaneous losses or delayed losses. Usually, the instantaneous prestress losses can be made up of three factors: due to penetration of wedges or tightening of a nut, due to elastic shortening of the structural element and due to friction with the prestressing duct or sheath. The delayed prestress losses can usually be made up of three other factors: due to shrinkage of the structural element, due to creep of the structural element and due to relaxation of the prestressing element.

In order to determine the axial strain in prestressing units and in structural elements subjected to axial strain, so-called load cells are used. A prestressing unit has two anchoring areas: an active anchoring area (from which the prestressing force is exerted) and a passive anchoring area. Thus, in order to determine the axial strain in a prestressing unit, the load cell is placed in the active anchoring area of the prestressing unit. A particular type of prestressing unit are the so-called active ground anchors, wherein the delayed prestress losses are also influenced by the variations in the contour conditions of the passive anchor of the prestressing unit.

The strain gauge load cells are devices, generally metallic, which enable the empirical characterisation of the structural strain existing in prestressed or compressed elements. The determination of this strain is possible thanks to the instrumentation of these devices by means of strain gauges which are connected to each other, normally by means of an assembly in a full Wheatstone bridge. For example, EP1486762B1 discloses a compression column load cell having a compression column machined with a square cross section, in the central plane of which a set of strain gauges is arranged in order to measure the strain to which the column is subjected. The load cells can also be used in weighing scales, as disclosed for example in US6596949B2.

US3535923A discloses a load transducer capable of producing an indication of an applied load. FR1519874A discloses a measuring device for measuring stresses caused in a cable by a fluid collected in an enclosure.

The correct measurement of the strain gauge load cells is influenced by the possible existence of significant flexion phenomena or concentration points of stresses in the walls of the load cell, generated by eccentricities in the application of the load and/or irregularities in the contour conditions of the device, such as irregularities in the bearing plates in the structural element.

The aforementioned proposals have been designed as solid elements which do not enable the prestressing elements to pass therethrough, which makes it difficult or impossible to characterise the strain existing in the active anchors of prestressing elements.

There are also load cells that do enable the prestressed elements to pass through an inner ring of the load cell. For example, EP1980712A1 discloses a nut-shaped strain gauge load cell which is introduced along a steel rod joined to the anchor the axial strain of which is to be characterised. Another example is disclosed in US4203318, which describes a strain gauge load cell for measuring the compression and axial elongation of load carrying members. This load cell is secured to the structural element the strain of which is to be measured by means of threaded ends. Another example can be seen in US2015075296A1, which discloses a strain gauge load cell for measuring the load of a rod. Finally, US7188535B1 discloses a strain gauge load cell designed to characterise forces and moments applied about multiple axes, for which various parameters related to the sensitivity of measurement in the aforementioned axes are detailed.

JP2016186441-A discloses a device for detecting force applied on a constructed rotary body. The force is detected using a strain gauge tubular device. US2005/103123A1 discloses an apparatus for determining stress in a pipeline to which the apparatus is mechanically anchored.

However, the load cells of these proposals do not enable the distortion caused by the phenomena of the concentration of stresses in the walls of the load cell to be eliminated from the axial strain measurement obtained. In other words, due to the fact that the aforementioned load cells do not guarantee uniformity of stresses in the walls, for example, due to irregular support conditions, the measurement of axial strain provided by these cells has a high uncertainty.

**DESCRIPTION OF THE INVENTION**

The present invention attempts to solve the aforementioned drawbacks by means of a strain gauge load cell for monitoring the axial strain in prestressing units or elements, such as active anchors, or for monitoring the axial strain in structural elements subjected to axial strain. The strain gauge load cell monitors the axial strain by eliminating errors induced, for example, by irregular support conditions.

This is achieved by means of a strain gauge load cell the body of which has an annular cross section, wherein both the thickness of the wall of this body, and therefore the cross section thereof, as well as the height of the load cell have been optimised. For the correct measuring, the load cell has strain sensors (such as strain gauges) uniformly distributed on said wall. The height and thickness of the load cell guarantee the uniformisation of stresses. This minimises the uncertainty in the measurement (axial strain) facilitated by the device.

The strain gauge load cell (also called "device" in the description) enables the empirical characterisation of the strain existing in the prestressed structural elements or elements subjected to axial strain, enabling programmed actuations in order to guarantee the correct operation of these structural elements, increasing the useful life thereof and reducing costs of repair and structural rehabilitation.

The invention is applicable in the monitoring of the strain existing in prestressing units of different types, such as bridge decks, beams and slabs with large spans, tie rods and suspension elements of bridge decks, covering structures and singular elements in building, anchor bolts in cable-stayed towers, wind turbine towers, stacks, columns or metal posts, prestressed joints in the configuration of metal structures, anchors of meshes or cable networks for stabilising embankments, and active ground anchors.

In order to ensure the operation of a prestressing unit, an anchor plate or block and a bearing plate or block are usually used. The anchor plate or block of the prestressing unit is the element which enables the prestressing unit to be anchored, guaranteeing the compression to which the prestressed structural element is intended to be subjected. The bearing plate or block is an element which is arranged between the anchor plate and the prestressed structural element. The bearing plate or block guarantees the uniformisation of stresses in the structural element to be prestressed or subjected to axial strain. The bearing plate can be, for example, a metal sheet, such as steel. In order to be able to determine the structural strain in the prestressing unit, the load cell is arranged between both devices, anchor plate and bearing plate.

A first aspect of the invention relates to a method for monitoring strain according to claim 1.

Preferably, the height or depth h of the body is

$$h \geq \frac{\varnothing_e}{2}.$$

In embodiments of the invention, the cell further comprises a protective cover which surrounds and protects the plurality of strain gauges.

In embodiments of the invention, the side wall of the body has at least one increased area with a diameter larger than said outer diameter $\varnothing_e$ of the body, said increased area being configured to fasten the protective cover around said body. Preferably, the side wall of the body has two increased areas with a diameter larger than said outer diameter $\varnothing_e$ of the body, configured to fasten the protective cover around said body.

In embodiments of the invention, the hollow cylindrical body has been obtained by machining.

In embodiments of the invention, the body is made of an isotropic material the elastic limit fy of which is greater than the average compression stress in the strain gauge load cell. Preferably, the body is made of an isotropic material the elastic limit fy of which is greater than twice the average compression stress in the strain gauge load cell.

In embodiments of the invention, the arrangement of the plurality of strain gauges on the side wall of the body at an equidistant distance between the upper surface and the lower surface of the body enables the average axial deformation $\varepsilon$ of the strain gauge load cell to be obtained, the average axial deformation $\varepsilon$ being linearly related to the axial prestressing strain N existing in the prestressing element or element subjected to axial strain to be characterised: $N = \varepsilon \cdot E \cdot \Omega$, wherein E is the modulus of elasticity E of the material with which the body has been manufactured, N is the axial strain existing in the prestressing element or element subjected to axial strain to be characterised, and $\Omega$ is the average transverse cross section of the load cell.

The characterisation of the strain existing in the prestressing element or element subjected to axial strain is performed by means of the strain gauges which enable, together with the choice of height of the load cell and thickness of the lateral wall thereof, the average axial deformation in the device to be obtained, compensating for possible phenomena of flexion or concentration of stresses caused by the application of eccentric loads and/or the existence of irregular contour conditions. By connecting the strain gauges to each other by means of, for example, an electronic assembly in a full Wheatstone bridge, the influence of the thermal phenomena on measuring the axial deformation of the device is compensated for.

Some additional advantages and features of the invention will become apparent from the detailed description that follows and will be indicated in particular in the attached claims.

## BRIEF DESCRIPTION OF DRAWINGS

As a complement to the description, and for the purpose of helping to make the features of the invention more readily understandable, in accordance with practical exemplary embodiments thereof, said description is accompanied by a set of drawings which, by way of illustration and not limitation, represent the following:

Figure 1 shows a 3D perspective view of a strain gauge load cell according to a possible embodiment of the invention.

Figure 2 shows an elevation view of the body of the strain gauge load cell of Figure 1, according to a possible embodiment of the invention.

Figure 3 shows a 3D perspective view of the protective cover of the strain gauge load cell according to a possible embodiment of the invention.

Figure 4 shows a front cross section of the load cell according to a possible embodiment of the invention.

Figure 5 shows a transverse cross section of the body of the strain gauge load cell according to a possible embodiment of the invention.

Figure 6 shows a standard assembly for the tensioning of prestressing bars, wherein the position of the strain gauge load cell in said assembly is illustrated.

Figure 7 shows a standard assembly for the tensioning of prestressing units formed by strands, wherein the position of the strain gauge load cell in said assembly is illustrated.

Figure 8 shows an electronic diagram of the instrumentation arranged in the strain gauge load cell according to a possible embodiment of the invention.

Figure 9 shows an example of strain gauges capable of measuring the axial and transverse deformation of the average transverse cross section of the load cell according to a possible embodiment of the invention.

Figure 10 shows a 3D perspective view of a protective bushing of a data transmission cable of the load cell.

Figure 11 shows a graph which represents the analysis of the optimisation of the heigth of the load cell in relation to the outer diameter of the body thereof, in order to minimise the error in the reading induced by the phenomena of the concentration of stresses created by a possible discontinuous support of the cell on an irregular bearing plate in the structural element.

Figure 12 schematically shows a system for monitoring the axial strain to which an element is subjected, which uses a wireless communication network to transport the measurement data obtained in the load cell to a remote monitoring platform or equipment.

## DETAILED DESCRIPTION OF THE INVENTION

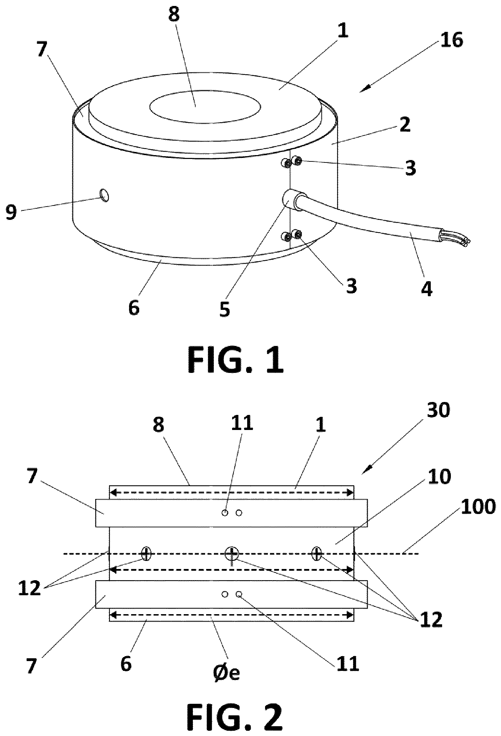

Figure 1 shows a 3D perspective view of a strain gauge load cell 16 according to a possible embodiment of the invention. The cell 16 used by the invention has a cylindrical tubular cross section. In other words, the load cell 16 has an annular cross section with inner diameter Øi. The hollow inner portion 8 defined by the cylindrical body of the load cell 16 has a constant inner diameter. The hollow portion 8 of the load cell 16 is obtained, for example, by machining a block of the material used. In Figure 1, the outer portion of the body of the load cell 16 is covered by a protective cover 2.

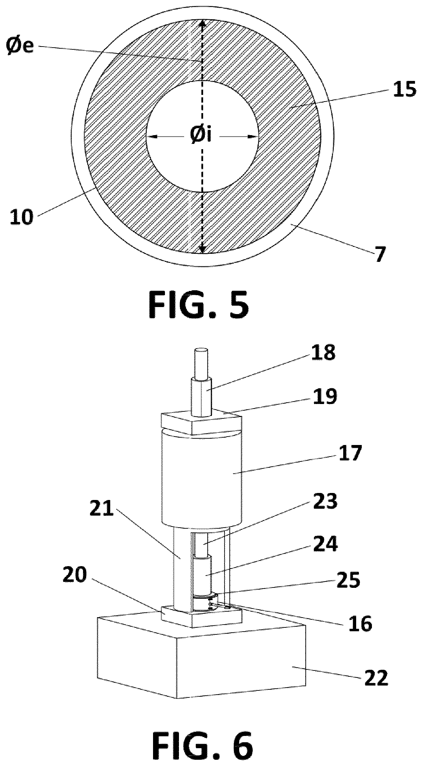

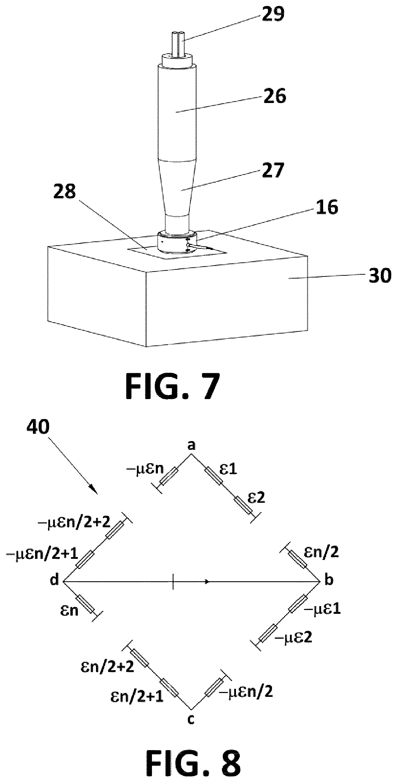

Figure 2 shows an elevation view of the body 30 of the load cell 16. In other words, the protective cover 2 has been removed from the load cell 16 of Figure 1 in order to enable the details of the body 30 thereof to be seen. At the upper and lower ends, the body 30 of the load cell 16 has respective contact surfaces: an upper contact surface 1 and a lower contact surface 6. The upper contact surface 1 is designed to, in use of the load cell 16, be in contact with an anchor plate or block of a prestressing unit. In turn, the lower contact surface 6 is designed so that, in use of the load cell 16, it is in contact with a bearing plate or block. This is illustrated, by way of example, in Figures 6 and 7. The contact surfaces 1, 6 are ring-shaped; in other words, they are open in the central portion thereof, such that they provide access to the hollow portion 8 of the load cell 16 shown in Figure 1. In other words, the body 30 defines a through hole. In use of the load cell 16, the loads will be applied to the load cell through the upper 1 and lower 6 contact surfaces.

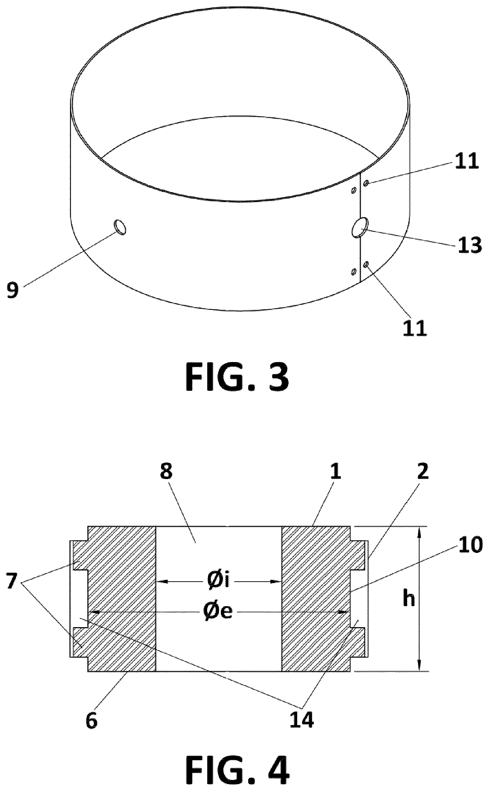

The outer side wall or surface 10 of the body 30 (in other words, the wall which defines the exterior of the cylindrical body) has along at least a portion of the cross section thereof, and specifically at least in the central portion thereof (see line 100 in Figure 2), an outer diameter Øe. Thus, the body 30 of the cell 16 has a ring-shaped cross section with an outer diameter Øe and inner diameter Øi, as shown for example in Figure 4. In other words, in embodiments of the invention, the body 30 is a cylinder with an annular cross section with thickness (Øe-Øi)/2. In Figure 4, the shaded portion corresponds to the body 30, preferably obtained by machining, whereas the inner portion without shading corresponds to the gap 8 defined by the body 30. This is also seen in the transverse cross section of the body 30 shown in Figure 5, although in Figure 5 an increased portion 7 is shown without shading in order to differentiate it from the portion with diameter Øe. In preferred embodiments of the invention, the outer side surface of the body 30 has at least one area with an increased transverse cross section 7 (increased perimeter) located close to the upper contact surface 1 and/or the lower contact surface 6. More preferably, as shown in Figure 2, the outer side wall of the body 30 has two areas with an increased transverse cross section 7: a first area with an increased cross section close to the upper contact surface 1 and a second area with an increased cross section close to the lower contact surface 6. In other words, the first area with an increased transverse cross section is comprised between the upper contact surface 1 and the central or intermediate area (see line 100 in Figure 2) of the body 30; and the second area with an increased cross section is comprised between the lower contact surface 6 and the central or intermediate area of the body 30. The object of this or these increased areas 7 is to enable the fastening of the protective cover 2 to the outer side surface of the body 30 of the load cell 16. Thus, it can be understood that, in embodiments of the invention, the outer side wall or surface of the body 30 has a variable outer diameter, since the diameter of the body 30 in the areas with an increased transverse cross section 7 has a diameter larger than the outer diameter Øe of the rest of the outer side wall or surface 10 of the body 30.

The central or intermediate area of the side surface of the body 30 of the load cell 16 (area indicated by line 100 in Figure 2) is an instrumented area, wherein measuring elements (strain gauges 12) are located which are described later. The measuring elements are located along the central line 100, which is an imaginary line defining a circumference which surrounds the side wall of the body 30. In other words, the central line or area 100 is located on the outer wall 10 of the body 30, substantially midway between the upper surface 1 and the lower surface 6. The central area 100 which defines the area wherein the measuring elements are placed is in the portion of the outer side wall or surface 10 of the body 30 the cross section of which has an outer diameter Øe. In this middle area (imaginary central line 100), the transverse cross section (called the average transverse cross section) of the load cell 16 is $\Omega$.

As mentioned, the load cell 16 comprises a gap (hole) 8 in the centre of the transverse cross-section thereof. The load cell 16 is especially suitable for measuring axial strain in prestressing elements or elements subjected to axial strain which can be introduced through the gap 8. Thus, the gap 8 is configured to introduce the prestressing element or element subjected to axial strain of which the axial strain thereof is to be obtained. In this manner, in use of the load cell 16, the deformation undergone by the load cell 16 will be proportional to the deformation which the element introduced through said gap 8 will undergo, which is what is to be characterised.

The body of the load cell 16 is made of an isotropic material, for example, a metal, such as steel. In particular, the body of the load cell 16 can be made of any isotropic material as long as the elastic limit fy thereof is greater than the average compression stress in the load cell, preferably greater than twice the average compression stress in the load cell. The elastic limit or elasticity limit of a material is the maximum stress that an elastoplastic material can withstand without undergoing permanent deformation. In other words, if stresses above this limit are applied, the material experiences plastic behaviour with permanent deformations and does not spontaneously regain the original shape thereof when the loads are removed. Normally, the prestressing elements are manufactured with steel with a high elastic limit. Therefore, the material with which the load cell is manufactured is preferably structural steel, suitable for applications wherein such prestressing elements are used.

The characterisation of the axial deformation $\varepsilon$ experienced by the load cell 16 in the use thereof is obtained from the information provided by elements 12 which respond to the applied stress or force, arranged on the outer side wall or surface 10 (area of the body 30 defined by an outer diameter Øe). More specifically, these elements 12 are located substantially along the central line 100, which, as explained, is substantially midway between the upper surface 1 and the lower surface 6. The elements 12 which respond to the stress are preferably strain gauges. Strain gauges are sensors the electrical resistance thereof varies with the applied force. In this manner, a gauge converts the axial strain caused by the applied stress into a change in electrical resistance. The axial deformation is in turn related to the axial prestressing strain existing in the prestressing element or element subjected to axial strain which is being monitored. These strain gauges 12 make up part of an electronic circuit. One possible electronic circuit is illustrated in Figure 8. The elements (gauges) 12 are fastened to the exterior of the intermediate side surface 100 for example by adhesion, such as by means of strain gauge adhesive. The elements 12 (strain gauges) should be distributed substantially uniformly along the central line 100. If the distribution thereof were not uniform, the measuring could introduce errors in the characterisation of the axial strain in the prestressing unit or in the structural element subjected to axial strain which is to be characterised.

The number of strain gauges 12 to be arranged in the body 30 is a function of the dimensions of the strain gauge load cell 16. Generally, the larger the outer diameter Øe of the body 30, the greater the number of gauges required. At least 4 strain gauges must be used. By way of example, each gauge can be separated from the neighbouring gauges (left and right) by a distance which can vary between 30 and 60 mm. Nevertheless, this range is illustrative, and the distance between gauges can vary depending on the circumstances and application, being able to be increased above 60 mm or reduced below 30 mm.

In a possible exemplary embodiment of the invention, sixteen strain gauges 12 can be installed -half longitudinal and the other half transverse-, which are equivalent to eight bidirectional strain gauges 12 -pair: one longitudinal and one transverse-. A person skilled in the art will understand that each pair of strain gauges 12 may be configured as a single bidirectional strain gauge 12 or as two unidirectional strain gauges. In this document, whenever reference is made to a strain gauge 12, it will be understood as the unidirectional (longitudinal or transverse) strain gauge 12.

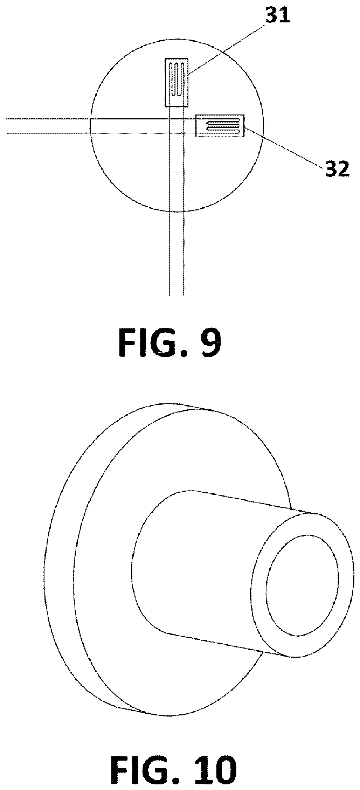

An example of a pair of strain gauges 12 according to a possible embodiment of the invention is shown in Figure 9. As stated, this pair is equivalent to one bidirectional strain gauge. The longitudinal strain gauge 31 enables the characterisation of the axial deformation $\varepsilon$ of the device, whereas the transverse strain gauge 32 is responsible for characterising the transverse deformation $-\mu\varepsilon$ of the device. Note that in every structural element subjected to a predominantly axial strain, the ratio between the transverse and axial deformation is "$-\mu$".

The load cell 16 has at least four strain gauges: at least two longitudinal strain gauges and at least two transverse strain gauges. The strain gauges have a certain nominal electrical resistance R, and have the property that, when they undergo a deformation ε, the electrical resistance thereof varies by an amount ΔR, there being a linear relationship between the deformation ε experienced by the strain gauge and the variation in the electrical resistance ΔR thereof. This linear relationship is known as the gauge factor F and has the following expression:

$$F = \frac{\Delta R/R}{\varepsilon}$$

Preferably, the strain gauges 12 arranged in the device are connected to each other through an electronic assembly in a full Wheatstone bridge, as seen in Figure 8. The assemblies in a full Wheatstone bridge are conventional and are outside the scope of the present invention. The longitudinal gauges (gauge 31 in Figure 9) are connected in series in the active branches of the Wheatstone bridge $\overline{ab}$ and $\overline{cd}$, whereas the transverse gauges (gauge 32 in Figure 9) are connected in series in the passive branches of the Wheatstone bridge $\overline{bc}$ and $\overline{da}$. The Wheatstone bridge is powered with a certain excitation voltage Vex, applied between points "a" and "c" of the assembly of the example, and an output voltage Vout measured between points "d" and "b" is obtained. In Figure 8, next to the longitudinal gauges of the branches $\overline{ab}$ and $\overline{cd}$, the deformation $\varepsilon_1$... $\varepsilon_{n/2}$, $\varepsilon_{n/2+1}$... $\varepsilon_n$ experienced by these gauges has been indicated, whereas together with the transverse gauges of the branches $\overline{bc}$ and $\overline{da}$, the deformation $-\mu\varepsilon_1$... $-\mu\varepsilon_{n/2}$, $-\mu\varepsilon_{n/2+1}$... $-\mu\varepsilon_n$ experienced by those gauges has also been indicated, wherein n is an even natural number. It is understood that all the longitudinal gauges measure the same deformation ε and all the transverse gauges measure the same deformation -με. When the strain gauges 12 adhered to the intermediate side surface 100 of the body 30 of the load cell 16 are deformed as shown in Figure 2, and said gauges measure deformations ε or -με (depending on whether they are longitudinal or transverse gauges), an increase in the output voltage ΔVout of the Wheatstone bridge is produced. This increase in voltage ΔVout is linearly related to the axial deformation ε experienced by the device, according to the following expression. Note that the expression is true regardless of the number of gauges used.

$$\Delta V_{out} = \frac{1+\mu}{2} \cdot V_{ex} \cdot \frac{\Delta R}{R}$$

$$\varepsilon = \frac{4 \cdot \Delta V_{out}}{F \cdot V_{ex}}$$

The arrangement of strain gauges 12 uniformly distributed along the intermediate side surface 100 of the wall 10 of the body 30 of the load cell 16 enables the average axial deformation ε of the strain gauge load cell 16 to be obtained. This average axial deformation corresponds to the average of the deformations $\varepsilon_1$... $\varepsilon_{n/2}$, $\varepsilon_{n/2+1}$... $\varepsilon_n$ experienced by the longitudinal strain gauges:

$$\varepsilon = \frac{\sum_{i=1}^{n} \varepsilon_i}{n}$$

The transverse gauges are used to compensate for thermal phenomena.

The average axial deformation ε is linearly related to the axial prestressing strain N existing in the prestressing element or element subjected to axial strain. This prestressing strain is the result of the product of the average axial deformation of the device ε by the modulus of elasticity E of the material from which the body of the device is manufactured and by the average transverse cross section Ω of the load cell (at the height of the imaginary central line 100). The axial strain is the product of the average compressive stress and the average transverse cross section.

$$N = \varepsilon \cdot E \cdot \Omega$$

Preferably, in order to protect the strain gauges 12 arranged in the body 30 of the load cell 12 against possible blows, it comprises a cylindrical protective cover 2 which at least partially surrounds the outer side surface of the body 30. In practice, the protective cover 2 is necessary to protect the gauges, since the environments wherein the load cell 16 is used are often very aggressive. The protective cover 2 must cover at least the portion of the outer side surface of the body 30 wherein the strain gauges are arranged, in other words, the side surface of the body 30 which comprises the imaginary central line 100, which is the line defining the area wherein the strain gauges are placed. In a preferred embodiment, wherein the outer side wall of the body 30 has two areas with an increased transverse cross section 7 (a first area with an increased cross section close to the upper contact surface 1 and a second area with an increased cross section close to the lower contact surface 6, see Figure 2), the protective cover 2 surrounds the side wall of the body 30 from the upper area with an increased cross section to the lower area with an increased cross section, as shown in Figure 1. This is also illustrated in the front cross section of the load cell of Figure 4.

Figure 3 shows a 3D perspective view of the protective cover 2 according to a possible embodiment of the invention. Holes 9, 11, 13 are illustrated in this figure. The holes 11 (at least four in the example of Figure 3) serve for fastening the protective cover 2 to the body 30 of the load cell 12, for example, by means of screws. In other words, the protective cover 2 can be fastened to the body 30 by means of a screw joint 3 like the one illustrated in Figure 1, in this case solved with four ordinary screws. The hole 13 serves for the outlet of the protective bushing of the data transmission cable, if there is one. It is, therefore, an optional hole. The hole 9 is an optional hole which serves to inject a protective resin for electrical connections (normally at the height of the area occupied by the strain gauges) which guarantees the impermeability of the device. The resin is optional, but recommended for protecting the electrical connections. This resin injection guarantees IP68 protection against possible adverse atmospheric phenomena, even enabling the correct operation of the device completely submerged in water. The volume of resin to be injected corresponds substantially to the volume existing between the side surface with outer diameter Øe, the two increased portions (upper and lower) of the areas with increased transverse cross section 7 and the protective cover 2. This volume is schematically represented in Figure 4 by means of reference 14.

In sum, the protective cover 2, the inner diameter of which is determined by the outer diameter of the body 30, and, more specifically, by the diameter of the perimeter with the increased area 7, guarantees the protection of the strain gauges 12 arranged in the device.

In order to guarantee the correct operation of the device and prevent phenomena of the concentration of normal stresses generated by a possible discontinuous support of the device on an irregular bearing plate (for example, the bearing plates 20, 28 illustrated in Figures 6 and 7, respectively) from affecting the value of the reading of the load cell 16, the body 30 of the device must be equipped with a minimum height h. As illustrated in Figure 4, the height h of the load cell 16 is the distance between the upper contact surface 1 and the lower contact surface 6. Through the analysis of various finite element models, validated with laboratory tests and assays, the inventors have set this minimum height h at 2/5 of the outer diameter Øe of the body 30 of the device 16. In other words, the height h must fulfil $h \geq \frac{2}{5}\emptyset_e$ , preferably $h \geq \frac{\emptyset_e}{2}$ . Note that this outer diameter Øe is the diameter of the body 30 without taking into account the increased areas 7, if there are any, intended to facilitate the fastening of a protective cover 2. Thus, the strain gauges used for monitoring the strain in prestressing elements or elements subjected to axial strain must have a minimum height h which enables the regularisation of normal compressive stresses in the walls of the device.

Moreover, in the case of prestressing elements or elements subjected to axial strains subjected to high loads, such as bridge guy lines with loads greater than 5,000 KN, a high height h of the load cell 16 would make the handling of these devices difficult. Therefore, and furthermore taking into account that an excessive height implies an increase in the economic cost of the cell, due, among others, to the cost of the material from which the body 30 is made and the machining effort (time), it is recommended that the maximum height of the cell 16 not be much higher than the minimum height. In embodiments of the invention, the maximum height of the cell 16 is no more than twice the outer diameter Øe of the body 30 of the cell 16. The height of the load cell 16 must be chosen such that the load cell has a suitable robustness and protection in order to guarantee the correct behaviour thereof under extreme conditions. The optimal height of the load cell corresponds to an approximate value of $\frac{\emptyset_e}{2}$ .

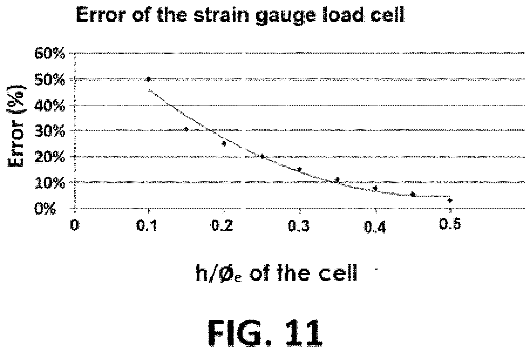

Figure 11 shows a graph which represents the analysis of the optimisation of the height h of the load cell 16 in relation to the outer diameter Øe of the body 30, with the aim of minimising the error in the reading induced by the phenomena of the concentration of stresses generated by a possible discontinuous support of the cell on an irregular bearing plate (for example, the bearing plates 20, 28 of Figures 6 and 7, respectively) in a structural element (structural element 22, 30 in Figures 6 and 7, respectively). As seen, the error induced by said phenomena decreases as the ratio between the height h and the outer diameter Øe increases and tends to stabilise at a minimum value when the ratio between the height h of the body and the outer diameter Øe thereof is 0.5. As this ratio exceeds 0.5, said error remains substantially stable at that minimum value. The graph in Figure 11 has been obtained by means of a simulation which uses a finite element model wherein the behaviour of a load cell manufactured with structural steel is analysed parametrically, varying the height/diameter ratio. This graph can be extrapolated to any isotropic material.

Due to the phenomena of the concentration of stresses generated in the average transverse cross section Ω of the device, in other words, in the transverse cross section of the body 30 located at substantially the same distance from the upper surface 1 and the lower surface 6 (in other words, in the transverse cross section corresponding to the perimeter line 100 of the wall 10 of the body 30), as a result of the possible discontinuous support of the load cell 16 on an irregular bearing plate, the load cell 16 must be equipped with an average transverse cross section Ω (cross section 15 of the body 30 at a distance equidistant from the upper surface 1 and the lower surface 6) which must not be less than a minimum value. Figure 5 illustrates a transverse cross section of the body 30 of the load cell 16, wherein the cross section 15 of the body 30 is shown. By means of the analysis of several finite element models, validated with laboratory tests and assays, this average transverse cross section Ω has been established in the one necessary so that the average normal stress, also called average compression stress, before the application of the axial strain N for which the device is intended to be dimensioned, does not exceed a certain value proportional to the elastic limit fy of the material with which the body of the device has been manufactured. Preferably, the average cross section Ω has been set at half the value of the elastic limit fy of the material with which the body of the device is manufactured.

Thus, starting from the fact that the average compression strain in the load cell 16 must be less than half the elastic limit of the material with which it is manufactured, and solving the following inequality:

$$\frac{N}{\Omega} \le f_y$$

it has been obtained that the ratio between the outer diameter Øe of the body 30 and the inner diameter Øi thereof must fulfil:

$$\emptyset_e \ge \sqrt{\left(\frac{N}{f_y/_2} + \frac{\pi}{4} \cdot \emptyset_i{}^2\right) \cdot \frac{4}{\pi}}$$

As explained, the body 30 can be made of any isotropic material as long as the elastic limit fy thereof is preferably greater than twice the average compression stress in the device. The inner diameter of the device Øi corresponds to the diameter of the gap 8.

Once the measurements of the output voltage Vout with and without deformation have been taken (and therefore measurements of the increase in the output voltage ΔVout), these measurements must be processed and interpreted, in order to obtain the strain to which the element being measured is subjected. To do so, processing means can be used, which can include computing means which carry embedded instructions or computer code in order to interpret the ratio between the strain to which the load cell 16 is subjected and the deformation captured by the strain gauges 12 and provided by the output signals. The processing means may belong to a monitoring platform associated with the load cell. The monitoring platform can further include one or more input/output interfaces, such as a screen or keyboard, for easy access to the data obtained. In order to communicate the load cell, and more specifically the electronic measurement assembly, with the processing means, different implementations can be used.

In a possible implementation, the powering of the Wheatstone bridge by means of an excitation voltage Vex and the reading of the output voltage Vout is performed through a data transmission cable 4 as shown in Figure 1. This cable 4 needs at least four conducting wires connected to the branches of the Wheatstone bridge, in other words, to points "a", "b", "c" and "d" in Figure 8. A possible protective bushing for the data transmission cable is illustrated in Figure 10. Thus, through a first pair of conducting wires, the Wheatstone bridge is powered (Vex) at points "a" and "c", and through a second pair of conducting wires, the output voltage (Vout) is measured at points "d" and "b". The information (output voltage) is then transmitted through said cable to the processing means or, alternatively, to storage means (for example, a memory), to which the processing means can have access. In general, the information obtained can be taken to the monitoring platform associated with the load cell.

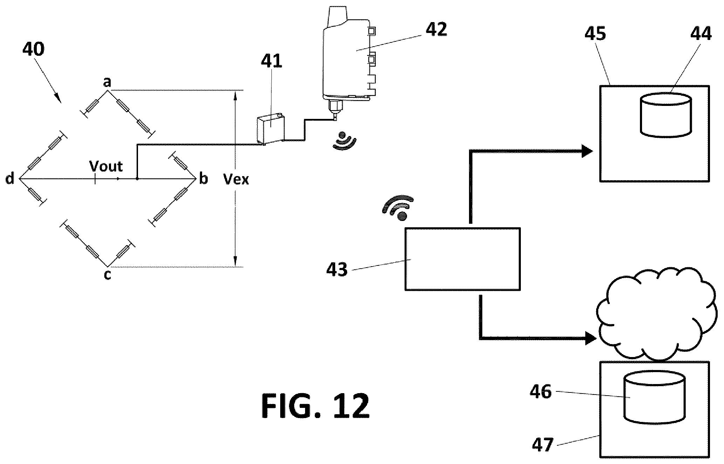

In an alternative implementation, schematically illustrated in Figure 12, instead of a data transmission cable for transporting the obtained measurement data, a wireless communication system is used. The electronic assembly (voltage Vex between points "a" and "c") is powered by means of a power system located next to the load cell. In a possible embodiment, the power system is implemented by means of a battery (not illustrated). In another possible embodiment, the power system is an autonomous power system (not illustrated) based on solar panels, implemented using an electronic circuit. Preferably, the power supply system and corresponding circuit are encapsulated in a box, which can be located externally to the load cell 16 or even inside it if possible (for example, in the case of the battery).

The data of the output voltage Vout measured in the electronic assembly is sent remotely to the place wherein it is to be stored and/or processed, such as to the monitoring platform with which the load cell is associated. In order to carry out the remote sending of the data, a wireless communication network is used. Preferably, a LoRa (Long Range) network is used. Alternatively, other wireless networks can be used, such as Wi-Fi, Bluetooth, or others. Figure 12 illustrates a possible implementation of a network for the remote sending of data. The data of the measured output voltage is conducted through respective wires from points "d" and "b" (Vout) of the electronic assembly 40 to a wireless transmitter device 42 provided with an antenna, such as a LoRa transmitter. Note that an electronic board (for example, printed circuit board) of the wireless transmitter device 42 can be embedded in the load cell 16 itself, with all the electronics being embedded with the cell itself.

In order to power the wireless device 42 (for example, to perform the readings and send the voltage Vout) a battery, such as a lithium battery, is preferably used. The wireless transmitter device 42 in turn wirelessly communicates with a wireless receiver device 43, such as a LoRa receiver device. The receiver device 43 may be a gateway. One same wireless receiver device 43, such as a gateway, can be simultaneously connected to a plurality of load cells 16 through the corresponding wireless transmission devices 42, thus establishing a mesh of wireless transmitter nodes connected to the same gateway. The equipment of the wireless telecommunications network, as well as the interconnection and communication thereof, are outside the scope of the present invention. As the wireless transmitter device 42, a conventional low-power device is preferably used. Due to the low consumption thereof, it is not necessary to resort to an electrical outlet to power it, since a conventional battery, such as the aforementioned lithium battery, for example 3.6 volts, provides a battery life of at least one year, or several years, depending on the frequency of data sending.

Preferably, the electronic assembly 40 (in the example, a Wheatstone bridge assembly like the one in Figure 8) is provided with a potentiometer 41 arranged between point "b" and the wireless transmitter device 42, in order to adjust the reading range and/or the starting point thereof. Thus, depending on the value of the adjustable variable resistance of the potentiometer 41, the value of Vout measured between points "b" and "d" is modified. This is due to the fact that, depending on the type of sensor (gauges) connected, it may be necessary to adjust said range by varying the sensitivity of the gauges. The output voltage Vout depends on the power voltage Vex, the current and the resistance of the circuit, which varies depending on the sensitivity of the sensors (gauges). Depending on the type of wireless transmitter device 42, current values (for example, between 4-20 mA) or voltage values (for example, 0-10 V) can be measured. The potentiometer 41 makes it possible to adjust the minimum load value (for example, 0 KN (Kilo-Newton)) on the cell to a minimum output current (for example, 4 mA). Depending on the balance of the Wheatstone bridge, it is sought that a maximum value (for example, of current, such as 20 mA) coincides with the maximum possible load on the cell. A linear relationship is thus established between the load on the cell and the output current (or voltage, if voltage were measured), for example, in a range required by the antenna of the wireless transmitter device 42. The potentiometer 41 introduces a variable resistance to the voltage output signal Vout so that it can be adjusted to said range. For example, in one possible implementation, a LoRa transmitter device is used the antenna of which requires a range of 4-20 mA. The potentiometer 41 enables the current at the output of the assembly 40 to be adjusted to this range. Thus, for example, an output of 4 mA corresponds to an initial load value of the load cell 16 of 0 KN, whereas 20 mA indicates the highest admissible load value in the cell 16. The potentiometer 41 is connected at one of the ends thereof to point "b" of the electronic assembly 40 and at the other end, for example, through a small cable, to the wireless transmitter device 42. To do so, the potentiometer 41 can be optionally arranged on a printed circuit board (not illustrated) in order to facilitate the location thereof next to the load cell. The set of the wireless transmitter device 42 and associated electronics (potentiometer, circuitry, etc.) can be embedded in the load cell 16 itself, all the electronics being embedded with the cell itself.

The raw data which is extracted from the Wheatstone bridge 40 are voltage records (Vout, or Vout adjusted by the potentiometer 41, if there is one) associated with the instant of time when they were produced. Once received in the wireless receiver device 43, the data or records can be stored in storage means 44, such as a database associated with a local server 45. The signal obtained from the Wheatstone bridge 40 is an analogue signal which is encoded for example in 4-20 mA format, as explained.

In order to interpret the reading received in the wireless receiver device 43, specific software can be used, such as Node-RED software, hosted for example in the local server 45. The information received (also called the payload) may need a translation or conversion from the communication format of the wireless receiver device 43 (for example, hexadecimal format) to another format (for example, alphanumeric), such that a current value (for example, within the range of 4-20 mA) or voltage value is obtained. This can be performed at any point wherein the data is collected, either on a local server 45 or a remote server 47. Using calibration lines made in previous tests in the laboratory, the analogue value read (for example in mA) is translated into the corresponding axial load value thereof. Once the axial load value to which the load cell 16 is subjected has been obtained, the axial load value can be stored in a database 46, for example a remote one, hosted on a remote server 47, such as a web server. This web server can be accessed through the monitoring platform associated with the load cell, such that the monitored axial load value can be obtained. Alternatively, a single server and associated database can be used which encompasses both the local server 45 and storage means 44, as well as the remote server 47 and database 46.

Next, two suitable standard assemblies are shown for two examples of elements to be characterised. As those skilled in the art will understand, these assemblies may vary depending, for example, on the prestressing element to be characterised.

Figure 6 shows a diagram of a standard assembly for tensioning (application of stress) a bar-type prestressing element 23 by means of a hollow extrusion hydraulic cylinder. In the assembly, the position of the strain gauge load cell 16 is illustrated. In this case, the anchor plate or block in contact with which the upper contact surface 1 of the load cell 16 is located, is formed by an anchor nut 24 and a washer 25. In turn, the bearing plate or block in contact with which the lower contact surface 6 of the load cell 16 is located, is formed by the element 20, which rests on a structural element 22. In the example shown, the tensioning of the prestressing element or element subjected to axial strain 23 is performed by using a hollow extrusion jack 17 which stretches the prestressing element or element subjected to axial strain 23 by means of pushing a reaction plate 19 fastened to the prestressing element or element subjected to axial strain 23 through a reaction nut 18. in order to enable the tensioning of the prestressing element or element subjected to axial strain 23 without affecting the anchor nut 24 responsible for maintaining the prestressing element or element subjected to axial strain 23 with the prestressing strain applied by the hollow extrusion jack 17, it is necessary to arrange a tensioning bridge 21 between the bearing plate 20 in the structural element 22 and the hollow extrusion jack 17. Once the prestressing force has been applied with the hollow extrusion jack 17, the anchor nut 24 must be rotated and tightened properly. In order to ensure a correct support on the upper contact surface 1 of the load cell 16, a washer 25 is arranged between the anchor nut 24 and the upper contact surface 1. Once the anchor nut 24 has been tightened, the pressure is released in the hollow extrusion jack 17, leaving the prestressing element or element subjected to axial strain 23 with the initial prestress value thereof. During this operation, certain instantaneous losses occur due to the tightening of the anchor nut 24. The quantification of these losses and consequently the real initial prestress value is one of the objectives of the invention.

Figure 7 shows a standard assembly diagram for the tensioning of prestressing units consisting of strands 29 (specifically three 0.6" strands 29). In the assembly, the position of the strain gauge load cell 16 is illustrated. In this case, the anchor plate or block in contact with which the upper contact surface 1 of the load cell 16 is located, is formed by an element 27. In turn, the bearing plate or block in contact with which the lower contact surface 6 of the load cell 16 is located, is formed by the element 28, which rests on a structural element 30. In this case, the prestressing unit is tensioned by means of the use of a multi-strand jack 26 capable of simultaneously stretching the three strands 29 making up the prestressing unit. These multi-strand jacks 26 are provided with internal wedges which are responsible for fastening the multi-strand jack 26 to the prestressing strands 29, for which reason it is not necessary to have a reaction element as in the case of tensioning prestressing bars. The final anchor of the prestressing unit is carried out by means of the anchor plate or block 27, also provided with wedges in order to guarantee the anchoring of the prestressing strands 29. In this case, the arrangement of a tensioning bridge is not necessary, but rather the tensioning jack (multi-strand jack) 26 rests directly on the anchor plate 27. When the pressure of the tensioning jack is released, the wedges of the anchor plate 27 are driven into this plate and the prestressing unit is left with the initial prestress value thereof. During this operation there are certain instantaneous losses due to wedge penetration. The quantification of these losses and consequently the real initial prestress value is one of the objectives of the invention. The anchor plate 27 rests on the load cell 16 and this in turn rests on the bearing plate 28 in the structural element 30.

The load cell of the invention makes it possible to determine the axial strain in prestressing units or elements, and in structural elements subjected to axial strain, eliminating the errors induced by irregular support conditions. This is achieved by optimising the thickness of the side wall of the body which forms the load cell and of the height of said body, together with a uniform distribution of strain sensors in the side wall of the body of the load cell. The internal and external diameters of the body of the load cell define the transverse cross section in the central portion of the load cell in order to guarantee a normal stress lower than the elastic limit of the material with which said body is manufactured. This guarantees the uniformisation of stresses in the average cross section of the device.

In this text, the word "comprises" and its variants (such as "comprising", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person skilled in the art could make (for example, regarding the choice of materials, dimensions, components, configuration, etc.), within the scope of what may be deduced from the claims which are defining the subject matter for which protection is sought.

The present invention covers all possible combinations of particular embodiments. For those skilled in the art, other objects, advantages and features of the invention will be deduced from both the description and the practical use of the invention.

**Claims**

1.  A method for monitoring the strain in a prestressed element or element subjected to axial strain, the method comprising the steps of:

    - providing a strain gauge load cell (16) comprising a hollow cylindrical body (30), which comprises:

    an upper contact surface (1) configured to contact an anchor plate;
    a lower contact surface (6) configured to contact a bearing plate;
    a side wall (10) delimiting a hole (8) which extends from the upper contact surface (1) to the lower contact surface (6),
    an outer diameter $\varnothing_e$ and an inner diameter $\varnothing i$ defining the thickness of said side wall (10), the inner diameter $\varnothing i$ being the diameter of said hole (8),

    a height h such that $h \geq \frac{2}{5}\varnothing_e$ ,

    the outer diameter $\varnothing_e$ fulfilling the following:

    $$\varnothing_e \geq \sqrt{\left(\frac{N}{fy/2} + \frac{\pi}{4}\cdot\varnothing_i{}^2\right)\cdot\frac{4}{\pi}}$$

    wherein N is an axial strain for which the strain gauge load cell (16) has been dimensioned and fy is the elastic limit of a material with which the body (30) of the strain gauge load cell (16) has been manufactured;

- arranging a plurality of strain gauges (12) on the side wall (10) of the body (30), wherein each strain gauge (12) is located at an equidistant distance between the upper contact surface (1) and the lower contact surface (6) of the body (30);
- connecting the strain gauges (12) via an electronic assembly (40) in a full Wheatstone bridge configuration;
- introducing the prestressed element or element subjected to axial strain in the hole (8);
- applying loads through the upper (1) and lower (6) contact surfaces;
- reading an output voltage from the electronic assembly (40); and
- processing the output voltage to obtain the axial strain to which the prestressed element or element subjected to axial strain is subjected.

2. The method of claim 1, wherein the height h of the body (30) is $h \geq \frac{\varnothing_e}{2}$ .

3. The method of any of claims 1-2, wherein the strain gauge load cell further comprises a protective cover (2) which surrounds and protects the plurality of strain gauges (12).

4. The method of claim 3, wherein the side wall of the body (30) has at least one increased area (7) with a diameter larger than said outer diameter $\varnothing_e$ of the body (30), said increased area (7) being configured to fasten the protective cover (2) around said body (30).

5. The method of claim 3, wherein the side wall of the body (30) has two increased areas (7) with a diameter larger than said outer diameter $\varnothing_e$ of the body (30), configured to fasten the protective cover (2) around said body (30).

6. The method of any of claims 1-5, wherein the hollow cylindrical body (30) has been obtained by machining.

7. The method of claims 1-6, wherein the body (30) is made of an isotropic material the elastic limit fy of which is greater than the average compression stress in the strain gauge load cell (16).

8. The method of claim 7, wherein the body (30) is made of an isotropic material the elastic limit fy of which is greater than twice the average compression stress in the strain gauge load cell (16).

9. The method of any of claims 1-8, wherein the arrangement of the plurality of strain gauges (12) on the side wall (10) of the body (30) at an equidistant distance between the upper contact surface (1) and the lower contact surface (6) of the body (30) enables the average axial deformation ε of the strain gauge load cell (16) to be obtained, the average axial deformation ε being linearly related to the axial prestressing strain N existing in the prestressing element or element subjected to axial strain to be characterised:

$$N = \varepsilon \cdot E \cdot \Omega$$

wherein E is the modulus of elasticity E of the material with which the body (30) has been manufactured, N is the axial strain existing in the prestressing element or element subjected to axial strain to be characterised, and Ω is the average transverse cross section of the load cell (16).

10. The method of any of the previous claims, wherein the output voltage provided by the electronic assembly in a full Wheatstone bridge is read by means of a data transmission cable (4).

11. The method of any of the previous claims, wherein the output voltage is read by connecting the electronic assembly to a wireless transmitter device (42) configured to send the information to a wireless receiver device (43) through a wireless communication network.

12. The method of claim 11, further comprising storing the information received by the wireless receiver device (43) in storage means (44) and processing said information in processing means connected to the wireless receiver device (43) to obtain the axial strain to which the prestressed element or element subjected to axial strain is subjected.

13. The method of any of claims 11-12, further comprising adjusting the reading range of the output voltage provided by the electronic assembly (40) using a potentiometer (41).

**Patentansprüche**

1. Verfahren zur Überwachung der Dehnung in einem vorgespannten Element oder einem Element, das einer axialen Dehnung ausgesetzt ist, wobei das Verfahren die folgenden Schritte umfasst:

- Bereitstellen einer Dehnungsmessstreifen-Kraftmesszelle (16), die einen hohlzylindrischen Körper (30) aufweist, welcher umfasst:

eine obere Kontaktfläche (1), die dazu ausgelegt ist, mit einer Ankerplatte in Kontakt zu kommen;

eine untere Kontaktfläche (6), die dazu ausgelegt ist, mit einer Lagerplatte in Kontakt zu kommen;

eine Seitenwand (10), die ein Loch (8) begrenzt, das sich von der oberen Kontaktfläche (1) zur unteren Kontaktfläche (6) erstreckt,

einen Außendurchmesser $\emptyset_e$ und einen Innendurchmesser $\emptyset_i$, welche die Dicke der Seitenwand (10) definieren, wobei der Innendurchmesser $\emptyset_i$ der Durchmesser der Loch (8) ist,

eine Höhe h derart, dass $h \geq \frac{2}{5}\emptyset_e$ gilt,

wobei der Außendurchmesser $\emptyset_e$ Folgendes erfüllt:

$$\emptyset_e \geq \sqrt{\left(\frac{N}{fy/2} + \frac{\pi}{4}\cdot\emptyset_i{}^2\right)\cdot\frac{4}{\pi}}$$

wobei N eine axiale Dehnung ist, für die die Dehnungsmessstreifen-Kraftmesszelle (16) dimensioniert worden ist, und fy die Elastizitätsgrenze eines Materials ist, aus dem der Körper (30) der Dehnungsmessstreifen-Kraftmesszelle (16) hergestellt worden ist;

- Anordnen einer Vielzahl von Dehnungsmessstreifen (12) auf der Seitenwand (10) des Körpers (30), wobei jeder Dehnungsmessstreifen (12) in einem gleichen Abstand zwischen der oberen Kontaktfläche (1) und der unteren Kontaktfläche (6) des Körpers (30) angeordnet ist;
- Verbinden der Dehnungsmessstreifen (12) über eine elektronische Baugruppe (40) in einer vollständigen Wheatstone-Brückenkonfiguration;
- Einführen des vorgespannten Elements oder des Elements, das einer axialen Dehnung ausgesetzt ist, in das Loch (8);
- Aufbringen von Lasten über die obere (1) und die untere (6) Kontaktfläche;
- Auslesen einer Ausgangsspannung von der elektronischen Baugruppe (40); und
- Verarbeiten der Ausgangsspannung, um die axiale Dehnung zu erhalten, der das vorgespannte Element oder das Element ausgesetzt ist, das einer axialen Dehnung ausgesetzt ist.

2. Verfahren nach Anspruch 1, wobei die Höhe h des Körpers (30) $h \geq \frac{\emptyset_e}{2}$ ist.

3. Verfahren nach einem der Ansprüche 1-2, wobei die Dehnungsmessstreifen-Kraftmesszelle ferner eine Schutzhülle (2) aufweist, die die Vielzahl von Dehnungsmessstreifen (12) umgibt und schützt.

4. Verfahren nach Anspruch 3, wobei die Seitenwand des Körpers (30) mindestens einen vergrößerten Bereich (7) mit einem Durchmesser aufweist, der größer ist als der Außendurchmesser $\emptyset_e$ des Körpers (30), wobei der vergrößerte Bereich (7) so ausgebildet ist, dass er die Schutzhülle (2) um den Körper (30) herum befestigt.

5. Verfahren nach Anspruch 3, wobei die Seitenwand des Körpers (30) zwei vergrößerte Bereiche (7) mit einem Durchmesser aufweist, der größer ist als der Außendurchmesser $\emptyset_e$ des Körpers (30), die dazu ausgebildet sind, die Schutzhülle (2) um den Körper (30) herum zu befestigen.

6. Verfahren nach einem der Ansprüche 1 bis 5, wobei der hohlzylindrische Körper (30) durch spanendes Bearbeiten erhalten worden ist.

7. Verfahren nach den Ansprüchen 1 bis 6, wobei der Körper (30) aus einem isotropen Material besteht, dessen Elastizitätsgrenze fy größer ist als die durchschnittliche Druckspannung in der Dehnungsmessstreifen-Kraftmesszelle (16).

8. Verfahren nach Anspruch 7, wobei der Körper (30) aus einem isotropen Material besteht, dessen Elastizitätsgrenze fy größer ist als das Doppelte der durchschnittlichen Druckspannung in der Dehnungsmessstreifen-Kraftmesszelle (16).

9. Verfahren nach einem der Ansprüche 1 bis 8, wobei die Anordnung der mehreren Dehnungsmessstreifen (12) auf der Seitenwand (10) des Körpers (30) in einem gleichen Abstand zwischen der oberen Kontaktfläche (1) und der unteren Kontaktfläche (6) des Körpers (30) es ermöglicht, die durchschnittliche axiale Verformung $\varepsilon$ der Dehnungsmessstreifen-Kraftmesszelle (16) zu erhalten, wobei die durchschnittliche axiale Verformung $\varepsilon$ linear mit der axialen Vorspannungsdehnung N zusammenhängt, die in dem Vorspannelement oder dem Element vorliegt, das einer axialen Dehnung ausgesetzt ist, charakterisiert durch:

$$N = \varepsilon \cdot E \cdot \Omega$$

worin E der Elastizitätsmodul E des Materials ist, aus dem der Körper (30) hergestellt worden ist, N die axiale Dehnung ist, die im Vorspannelement oder in dem Element besteht, das einer axialen Dehnung ausgesetzt ist, und $\Omega$ der durchschnittliche transver-

sale Querschnitt der Kraftmesszelle (16) ist.

10. Verfahren nach einem der vorstehenden Ansprüche, wobei die von der elektronischen Baugruppe in einer vollständigen Wheatstone-Brücke gelieferte Ausgangsspannung mittels eines Datenübertragungskabels (4) ausgelesen wird.

11. Verfahren nach einem der vorstehenden Ansprüche, wobei die Ausgangsspannung durch Verbinden der elektronischen Baugruppe mit einer drahtlosen Sendevorrichtung (42) ausgelesen wird, die eingerichtet ist, die Informationen über ein drahtloses Kommunikationsnetzwerk an eine drahtlose Empfangseinrichtung (43) zu senden.

12. Verfahren nach Anspruch 11, ferner aufweisend, Speichern der von der drahtlosen Empfangseinrichtung (43) empfangenen Informationen in einem Speichermittel (44) und Verarbeiten dieser Informationen in einem mit der drahtlosen Empfangseinrichtung (43) verbundenen Verarbeitungsmittel, um die axiale Dehnung zu erhalten, der das vorgespannte Element oder das Element ausgesetzt ist, das einer axialen Dehnung ausgesetzt ist.

13. Verfahren nach einem der Ansprüche 11 - 12, ferner aufweisend, Einstellen des Auslesebereichs der von der elektronischen Baugruppe (40) gelieferten Ausgangsspannung unter Verwendung eines Potentiometers (41).

**Revendications**

1. Méthode pour surveiller la contrainte dans un élément de pré-tension ou un élément soumis à une contrainte axiale, la méthode comprenant les étapes suivantes :

   - fournir une cellule de charge à jauge de contrainte (16) comprenant un corps (30) cylindrique creux, qui comprend :

      une surface de contact supérieure (1) configurée pour venir en contact avec une plaque d'ancrage ;
      une surface de contact inférieure (6) configurée pour venir en contact avec une plaque d'appui ;
      une paroi latérale (10) délimitant un trou (8) qui s'étend de la surface de contact supérieure (1) à la surface de contact inférieure (6),
      un diamètre extérieur $\varnothing_e$ et un diamètre intérieur $\varnothing_i$ définissant l'épaisseur de ladite paroi latérale (10), le diamètre intérieur $\varnothing_i$ étant le diamètre dudit trou (8),

une hauteur h telle que $h \geq \frac{2}{5}\varnothing_e$ $\varnothing_e$

le diamètre extérieur $\varnothing_e$ satisfaisant à la condition suivante :

$$\varnothing_e \geq \sqrt{\left(\frac{N}{fy/2} + \frac{\pi}{4}\cdot\varnothing_i^2\right)\cdot\frac{4}{\pi}}$$

où N est une contrainte axiale pour laquelle la cellule de charge à jauge de contrainte (16) a été dimensionnée, et *fy* est la limite d'élasticité d'un matériau avec lequel le corps (30) de la cellule de charge à jauge de contrainte (16) a été fabriqué ;

   - agencer une pluralité de jauges de contrainte (12) sur la paroi latérale (10) du corps (30), dans laquelle chaque jauge de contrainte (12) est située à une distance équidistante entre la surface de contact supérieure (1) et la surface de contact inférieure (6) du corps (30) ;
   - connecter les jauges de contrainte (12) via un ensemble électronique (40) dans une configuration de pont de Wheatstone complet ;
   - introduire l'élément de pré-tension ou l'élément soumis à une contrainte axiale dans le trou (8) ;
   - appliquer des charges par l'intermédiaire des surfaces de contact supérieure (1) et inférieure (6) ;
   - lire une tension de sortie de l'ensemble électronique (40) ; et
   - traiter la tension de sortie pour obtenir la contrainte axiale à laquelle est soumis l'élément de pré-tension ou l'élément soumis à une contrainte axiale.

2. Méthode selon la revendication 1, dans laquelle la hauteur h du corps (30) est $h \geq \frac{\varnothing_e}{2}$.

3. Méthode selon l'une des revendications 1 à 2, dans laquelle la cellule de charge à jauge de contrainte comprend en outre un couvercle de protection (2) qui entoure et protège la pluralité de jauges de contrainte (12).

4. Méthode selon la revendication 3, dans laquelle la paroi latérale du corps (30) a au moins une zone élargie (7) dont un diamètre est supérieur audit diamètre extérieur $\varnothing_e$ du corps (30), ladite zone élargie (7) étant configurée pour fixer le couvercle de protection (2) autour dudit corps (30).

5. Méthode selon la revendication 3, dans laquelle la paroi latérale du corps (30) a deux zones élargies (7) dont un diamètre est supérieur audit diamètre extérieur $\emptyset_e$ du corps (30), configurées pour fixer le couvercle de protection (2) autour dudit corps (30).

6. Méthode selon l'une des revendications 1 à 5, dans laquelle le corps (30) cylindrique creux a été obtenu par usinage.

7. Méthode selon les revendications 1 à 6, dans laquelle le corps (30) est réalisé en un matériau isotrope dont la limite d'élasticité *fy* est supérieure à l'effort de compression moyen dans la cellule de charge à jauge de contrainte (16).

8. Méthode selon la revendication 7, dans laquelle le corps (30) est réalisé en un matériau isotrope dont la limite d'élasticité *fy* est supérieure au double de l'effort de compression moyen dans la cellule de charge à jauge de contrainte (16).

9. Méthode selon l'une des revendications 1 à 8, dans laquelle l'agencement de la pluralité de jauges de contrainte (12) sur la paroi latérale (10) du corps (30) à une distance équidistante entre la surface de contact supérieure (1) et la surface de contact inférieure (6) du corps (30) permet d'obtenir la déformation axiale moyenne ε de la cellule de charge à jauge de contrainte (16), la déformation axiale moyenne ε étant linéairement liée à la contrainte de pré-tension axiale N présente dans l'élément de pré-tension ou l'élément soumis à une contrainte axiale à caractériser :

$$N = \varepsilon \cdot E \cdot \Omega$$

où E est le module d'élasticité E du matériau avec lequel le corps (30) a été fabriqué, N est la contrainte axiale présente dans l'élément de pré-tension ou l'élément soumis à une contrainte axiale à caractériser, et Ω est la section transversale moyenne de la cellule de charge (16).

10. Méthode selon l'une des revendications précédentes, dans laquelle la tension de sortie fournie par l'ensemble électronique dans un pont de Wheatstone complet est lue au moyen d'un câble de transmission de données (4).

11. Méthode selon l'une des revendications précédentes, dans laquelle la tension de sortie est lue en connectant l'ensemble électronique à un dispositif émetteur sans fil (42) configuré pour envoyer les informations à un dispositif récepteur sans fil (43) via un réseau de communication sans fil.

12. Méthode selon la revendication 11, comprenant en outre le stockage des informations reçues par le dispositif récepteur sans fil (43) dans des moyens de stockage (44) et le traitement desdites informations dans des moyens de traitement connectés au dispositif récepteur sans fil (43) afin d'obtenir la contrainte axiale à laquelle est soumis l'élément de pré-tension ou l'élément soumis à une contrainte axiale.

13. Méthode selon l'une des revendications 11 à 12, comprenant en outre l'ajustement de la plage de lecture de la tension de sortie fournie par l'ensemble électronique (40) à l'aide d'un potentiomètre (41).

**FIG. 1**

**FIG. 2**

**FIG. 3**

**FIG. 4**

Øe

Øi

15

10

7

**FIG. 5**

18

19

17

21

23

24

20

25

16

22

**FIG. 6**

**FIG. 7**

**FIG. 8**

**31**

**32**

# FIG. 9

# FIG. 10

FIG. 11

FIG. 12

**EP 4 102 199 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1486762 B1
- US 6596949 B2
- US 3535923 A
- FR 1519874 A
- EP 1980712 A1
- US 4203318 A
- US 2015075296 A1
- US 7188535 B1
- JP 2016186441 A
- US 2005103123 A1